# EUROPÄISCHE PATENTSCHRIFT

(11) **EP 2 898 222 B1**
(45) Veröffentlichungstag und Bekanntmachung des Hinweises auf die Patenterteilung: **31.10.2018**
(21) Anmeldenummer: 13762740.2
(22) Anmeldetag: 21.08.2013
(51) Int. Cl.: F15B 15/14

(54) **GEBERZYLINDER MIT EINEM ANSCHLAGRING UND EIN VERFAHREN ZUR HERSTELLUNG EINES SOLCHEN ANSCHLAGRINGS**
MASTER CYLINDER WITH A STOP RING AND A METHOD FOR PRODUCING SAID TYPE OF STOP RING
CYLINDRE ÉMETTEUR POURVU D'UN SEGMENT DE BUTÉE ET PROCÉDÉ DE FABRICATION D'UN TEL SEGMENT DE BUTÉE

(30) Priorität: 19.09.2012 DE 102012216704
(43) Veröffentlichungstag der Anmeldung: 29.07.2015
(73) Patentinhaber: Schaeffler Technologies AG & Co. KG, 91074 Herzogenaurach (DE)
(72) Erfinder: WAGNER, Philippe, 45140 Ormes (FR)
(86) Internationale Anmeldenummer: PCT/DE2013/200133
(87) Internationale Veröffentlichungsnummer: WO 2014/044267

(56) Entgegenhaltungen:
- DE-A1- 19 714 647
- DE-A1-102012 222 878
- FR-A1- 2 201 409
- FR-A1- 2 828 519
- GB-A- 2 347 720

## Beschreibung

Gegenstand der vorliegenden Erfindung ist ein hydraulisches Betätigungssystem einer Reibungskupplung umfassend einen Geberzylinder mit einem Anschlagring und ein Verfahren zur Herstellung eines solchen Anschlagrings. Die Geberzylinder werden insbesondere in hydraulischen Betätigungsvorrichtungen einer Reibungskupplung eines brennkraftmaschinengetriebenen Automobils eingesetzt.

Geberzylinder werden bei der hydraulischen Übertragung eingesetzt. Diese beruht auf der Übertragung von Kraft durch ein Hydraulikmedium von einem Geberzylinder zu einem Nehmerzylinder. Bei der Betätigungsvorrichtung einer Kupplung eines brennkraftmaschinengetriebenen Automobils ist üblicherweise der Geberzylinder mit dem Kupplungspedal verbunden, so dass eine Betätigung des Kupplungspedals zu einer Bewegung des Kolbens im Geberzylinder führt, die über das Hydraulikmedium an den Nehmerzylinder übertragen wird und zu einem Betätigen der Kupplung, das heißt zu einem Einrücken oder Ausrücken der Kupplung führt. Es ist hierbei zu verhindern, dass durch Öffnung, durch die der Kolben in den Zylinder eindringt, Schmutz in den Zylinder eindringt. Die Druckschrift FR 2 201 409 A1 offenbart z.B. eine Kolben-Zylinder-Einheit mit einer Kolbenstange, wobei ein Anschlag zur axialen Sicherung der Kolbenstange vorgesehen ist. Im Bereich dieses Anschlags ist ein Dichtring vorgesehen, der den Schmutzeintrag von außen in den Zylinder verhindern soll. Hierzu ist es weiterhin aus dem Stand der Technik bekannt, den Kolben mit einem sogenannten Abstreifring zu versehen, der eventuell am Kolben anhaftenden Schmutz beim Betätigen des Kolbens und beim Eindringen desselben in den Zylinder abstreift. Aus dem Stand der Technik ist es bekannt, solche Abstreifringe gemeinsam mit einem Anschlagring zu montieren, wobei letzterer einen definierten Anschlag des Kolbens am Zylinder ermöglicht. Hierbei wird der Abstreifring mit dem Anschlagring am Zylinder fixiert. Das Patentdokument GB 2 347 720 offenbart ein weiteres Beispiel des Standes der Technik.

Weiterhin weisen solche aus dem Stand der Technik bekannten Geberzylinder noch die Besonderheit auf, dass diese mit einer Transportsicherung gesichert werden, bis sie in das Kraftfahrzeug verbaut werden. Die Transportsicherung sorgt dafür, dass beim Transport der Kolben nicht mehr herausfallen kann. Hierzu sind übliche Transportsicherungen an den Anschlagring angeclipst und so ausgebildet, dass eine definierte Einbaurichtung des Kolbens besteht, diese also bei einer Drehung um 90° um seine Längsachse einen veränderten Querschnitt aufweist. Dadurch kann im Stand der Technik verhindert werden, dass bei montierter Transportsicherung der Kolben den Zylinder verlässt. Dies bedingt jedoch auch, dass eine relative Ausrichtung des Kolbens zum Zylinder bei der Montage des Geberzylinders eingehalten muss und nach Einführen des Kolbens in den Zylinder eine 90° Drehung erfolgen muss.

Aus der Druckschrift DE 197 14 647 A1 ist ein hydraulisches Betätigungssystem einer Reibungskupplung gemäß dem Oberbegriff des Patentanspruchs 1 bekannt.

Hiervon ausgehend liegt der vorliegenden Erfindung die Aufgabe zugrunde, die aus dem Stand der Technik bekannten Nachteile zumindest teilweise zu überwinden und insbesondere einen Geberzylinder vorzuschlagen, der einfach montiert werden kann und das Eindringen von Schmutz in den Zylinder sicher verhindert.

Diese Aufgaben werden gelöst mit den Merkmalen der unabhängigen Ansprüche, die jeweiligen abhängigen Ansprüche sind auf vorteilhafte Weiterbildungen der Erfindung gerichtet.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Aufgabe wird gelöst durch ein hydraulisches Betätigungssystem einer Reibungskupplung, insbesondere in einem brennkraftmaschinenbetriebenen Fahrzeug, umfassend einen Geberzylindermit einem Zylinder, mit einem Kolben mit Kolbenstange und einen Anschlagring als Anschlag des Kolbens, wobei der Anschlagring einen Anschlagabschnitt und eine Abstreifeinrichtung aufweist, die die Kolbenstange elastisch umschließt, und wobei die Abstreifeinrichtung einstückig am Anschlagabschnitt angeformt ist. Zudem ist der Anschlagring aus zwei identischen Halbteilen aufgebaut.

Im Gegensatz zu aus dem Stand der Technik bekannten Geberzylindern liegt bei der vorliegenden Erfindung also kein separater Anschlagring und ein separater Abstreifring vor, vielmehr ist eine Abstreifeinrichtung direkt am Anschlagring angeformt. Hierdurch kann die Zahl der Teile bei der Montage verringert werden. Die elastische Abstreifeinrichtung sorgt für ein wirkungsvolles Abstreifen von eventuell am Kolben anhaftenden Schmutzpartikeln beim Durchdringen der Abstreifeinrichtung. Da die Abstreifeinrichtung nunmehr einstückig am Anschlagabschnitt angeformt ist, kann auf eine Transportsicherung verzichtet werden, so dass die Zahl der Teile weiter reduziert werden kann. Durch den Verzicht auf die Transportsicherung ist es gleichzeitig möglich, einen rotationssymmetrischen Kolben einzusetzen, wodurch die Montage weiter erleichtert wird.

Die Halbteile decken jeweils einen Winkelbereich von 180° und sind bevorzugt so ausgebildet, dass diese ohne weitere Verbindungsmittel miteinander verbunden werden können, indem also Verbindungsmittel angeformt sind. Diese sind bevorzugt so ausgebildet, dass zueinander korrespondierende Verbindungsmittel in den beiden Halbteilen aufgebaut sind, die eine entsprechende kraft- und/oder formschlüssige Verbindung miteinander ausbilde können. Beispielsweise können die Halbteile entsprechende Zapfen und Zapfenaufnahmen aufweisen, die zur Ausbildung der Verbindung ineinandergeschoben werden können.

Gemäß einer vorteilhaften Ausgestaltung des hydraulischen Betätigungssystems sind die Halbteile durch eine kraftschlüssige Verbindung miteinander verbunden sind.

Insbesondere ist es bevorzugt, die zwei Halbteile jeweils in zwei Bereichen miteinander zu verbinden, wobei in jedem dieser Verbindungsbereiche in einem Halbteil ein Zapfen und eine entsprechende Zapfenaufnahme im jeweils anderen Halbteil ausgebildet sind. Dies ermöglicht eine einfache Montage und einen sicheren Sitz. Durch die einfache Ausbildung der Verbindungsmittel kann so der Anschlagring aus genau zwei identischen Teilen ausgebildet werden, was die Montage und die Bevorratung vereinfacht.

Gemäß einer vorteilhaften Ausgestaltung des hydraulischen Betätigungssystems ist die Abstreifeinrichtung aus einem elastischen Material ausgebildet.

Insbesondere umfasst das elastische Material mindestens ein Elastomer, also formfeste aber elastisch veformbare Kunststoffe wie beispielsweise thermoplastische Elastomere, bevorzugt auf Olefinbasis wie PP und EPDM, auf Urethanbasis, thermoplastische Polyesterelastomere, thermoplastische Copolyester, Styrol-Blockcopolymere, thermoplastische Copolyamide.

Gemäß einer vorteilhaften Ausgestaltung ist der Anschlagabschnitt aus einem thermoplastischen Kunststoff ausgebildet.

Insbesondere wird dabei eine Materialkombination von Anschlagabschnitt und Abstreifeinrichtung gewählt, bei der das Material aus dem Anschlagabschnitt ausgebildet ist deutlich härter ist als die elastische Abstreifeinrichtung.

Gemäß einer vorteilhaften Ausgestaltung ist der Anschlagabschnitt gemeinsam mit der entsprechenden Abstreifeinrichtung in einer Mehrkomponentenspritztechnik ausgebildet ist.

Der Einsatz einer Mehrkomponenten- und insbesondere Zweikomponentenspritzgusstechnik zur Erstellung des Anschlagrings hat sich als besonders geeignet herausgestellt, da so der Anschlagring beziehungsweise die entsprechenden Halbteile mit jeweils zwei Bereichen sehr unterschiedliche physikalische Eigenschaften, nämlich dem Anschlagabschnitt und der Abstreifeinrichtung einfach, schnell und kostengünstig hergestellt werden kann. Die entsprechenden Werkzeuge sind einfach und kostengünstig herstellbar.

Gemäß einer vorteilhaften Ausgestaltung ist der Anschlagring über eine kraft- und/oder formschlüssige Verbindung mit dem Zylinder verbunden.

Insbesondere handelt es sich hierbei um eine Clipverbindung, eine Schnappverbindung oder eine Bajonettverbindung. Als besonders vorteilhaft sich die Ausbildung einer Bajonettverbindung herausgestellt, da durch diese eine sichere Verbindung mit dem Zylinder hergestellt werden kann und gleichzeitig eine axiale Absicherung des Anschlagrings gegen Verschieben in einfacher Weise hergestellt werden kann. Zudem kann die Bajonettverbindung ohne den Einsatz von Werkzeugen montiert und gegebenenfalls wieder gelöst werden.

Gemäß einem weiteren Aspekt der vorliegenden Erfindung wird ein Verfahren zur Herstellung eines Anschlagrings für einen Geberzylinder für ein hydraulisches Betätigungssystem einer Reibungskupplung, insbesondere in einem brennkraftmaschinenbetriebenen Fahrzeug, vorgeschlagen, bei dem der Anschlagring einen Anschlagabschnitt und eine Abstreifeinrichtung zum elastischen Umschließen einer Kolbenstange umfasst, wobei Anschlagabschnitt und Abstreifeinrichtung gemeinsam in einer Mehrkomponenten-Spritzgusstechnik ausgebildet werden.

Der Einsatz der Mehrkomponenten-Spritzgusstechnik zur Ausbildung des Anschlagrings ist besonders vorteilhaft, da so auf einfache Art und Weise die kostengünstige Herstellung des Anschlagrings mit zwei Bereichen physikalisch unterschiedliche Eigenschaften, nämlich dem Anschlagabschnitt und der Abstreifeinrichtung möglich ist.

Gemäß einer vorteilhaften Ausgestaltung des Verfahrens wird der Anschlagring aus Halbteilen ausgebildet, die kraftschlüssig miteinander verbunden werden.

Das bedeutet, dass die Halbteile jeweils Anschlagabschnitt und Abstreifeinrichtung aufweisen und die Halbteile nach der Mehrkomponenten-Spritzgusstechnik ausgebildet werden. Durch die Verbindung der Halbteile entsteht ein Anschlagring mit einem Anschlagabschnitt und einer Abstreifeinrichtung. Die Ausbildung des Anschlagrings aus zwei Halbteilen, die kraftschlüssig miteinander verbunden werden erlaubt es, den Anschlagring um den Kolben herum auszubilden und diesen so durch diesen im Zylinder zu fixieren.

Die für den Geberzylinder offenbarten Details und Vorteile lassen sich auf das Verfahren zur Herstellung des Anschlagrings übertragen und umgekehrt. Im Folgenden wird die Erfindung anhand der beigefügten Figuren näher erläutert, wobei die Erfindung nicht auf die dort gezeigten Details und Ausführungsbeispiele beschränkt ist. Es zeigen schematisch und exemplarisch:
Fig. 1: einen als bekannt angenommenen Geberzylinder;
Fig. 2: eine erste perspektivische Ansicht eines Halbteils eines Anschlagrings;
Fig. 3: eine zweite perspektivische Ansicht eines Anschlagrings;
Fig. 4: eine Ansicht eines Geberzylinders;
Fig. 5: einen Längsschnitt durch einen Geberzylinder; und
Fig. 6: ein Detail des Längsschnitts des Geberzylinders gemäß Fig. 5.

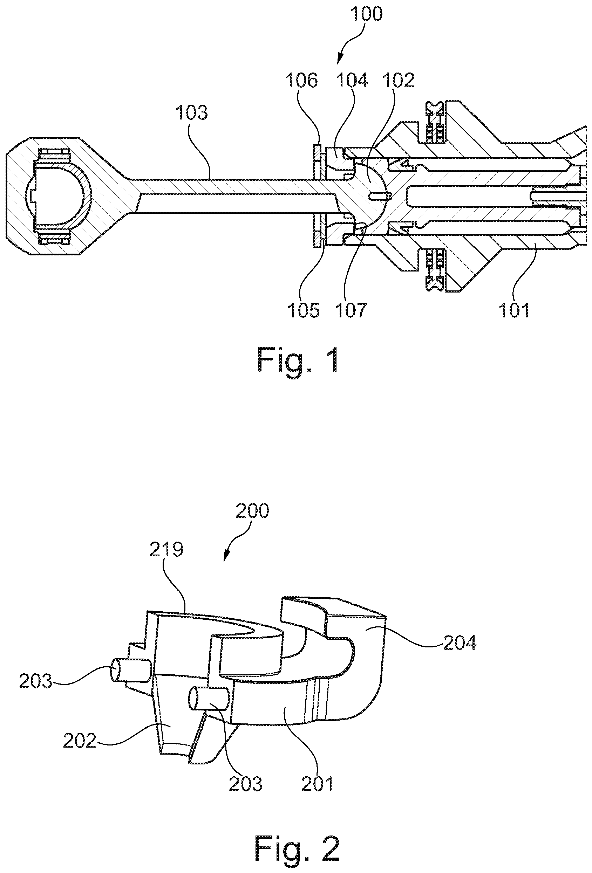

Fig. 1 zeigt schematisch einen Längsschnitt durch einen als bekannt angenommenen Geberzylinder 100. Dieser weist einen Zylinder 101 und einen Kolben 102 mit Kolbenstange 103 auf. Der Zylinder weist einen Anschlagring 104 mit Anschlag 107, einen Abstreifring 105 und eine Transportsicherung 106 auf. Die Transportsicherung 106 ist über eine Clipverbindung mit dem Anschlagring 104 verbunden. Um die Funktion der Transportsicherung 106 zu gewährleisten, weist die Kolbenstange 103 keine Rotationssymmetrie auf, die Kolbenstange wird durch Einschieben durch die Transportsicherung 106, den Abstreifring 105 und den Anschlagring 104 und anschließendes Verdrehen um 90° im Zylinder 101 montiert.

Fig. 2 zeigt schematisch eine erste perspektivische Ansicht eines Halbteils 200 zur Bildung eines Anschlagrings. Das Halbteil 200 weist einen Anschlagabschnitt 201 und Abstreifeinrichtung 202 auf. Die Abstreifeinrichtung 202 ist elastisch und insbesondere aus einem thermoplastischen Elastomer aufgebaut. Der Anschlagabschnitt 201 ist aus einem Kunststoff und zwar insbesondere aus einem thermoplastischen Kunststoff einer größeren Härte als das Material der Abstreifeinrichtung 202 aufgebaut. Das Halbteil weist zwei Zapfen 203 auf, die zur Verbindung zweiter Halbteile 200 miteinander genutzt werden. Das Halbteil 200 weist ein Bajonett 204 auf, mit welchem der entsprechende auszubildende Anschlagring am Zylinder eines Geberzylinders befestigt werden kann. Das Halbteil 200 weist ferner einen Anschlag 219 für den Kolben im eingebauten Zustand auf.

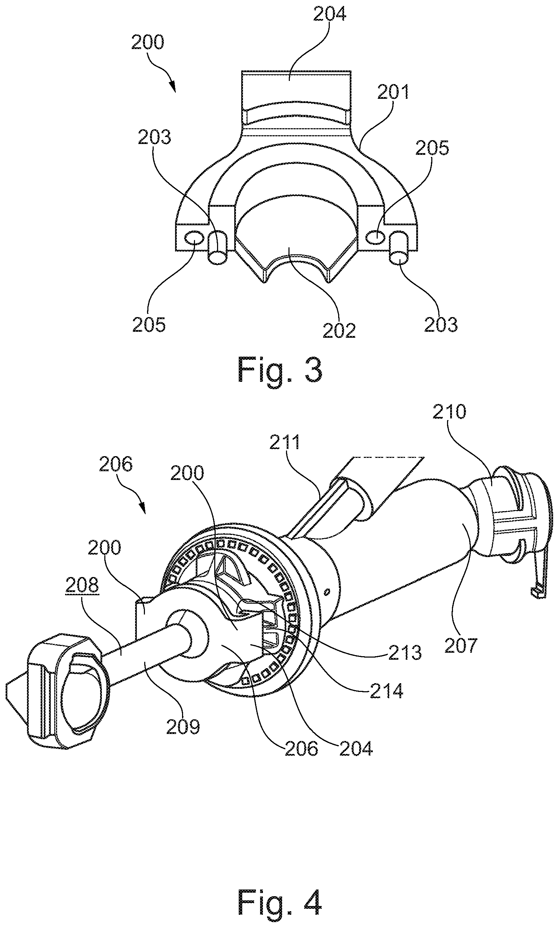

Fig. 3 zeigt schematisch ein identisches Halbteil 200. Fig. 3 zeigt die Zapfenaufnahmen 205, die zur Aufnahme der Zapfen 203 eines anderen Halbteils 200 geeignet und bestimmt sind. Durch die Positionierung von Zapfen 203 und Zapfenaufnahme 205 ist es möglich, einen Anschlagring aus zwei identischen Halbteilen 200 durch Einschieben der Zapfen 203 des einen Halbteils 200 in die entsprechende Zapfenaufnahmen 205 des anderen Halbteils 200 auszubilden. Der entstehende Anschlagring weist dann einen kreisringförmigen Anschlagabschnitt und eine kreisringförmige Abstreifeinrichtung auf.

Dies wird auch bei der schematischen perspektivischen Darstellung eines Geberzylinders 206 gemäß Fig. 4 deutlich. Der Geberzylinder 206 weist dabei einen Zylinder 207, einen Kolben 208 mit Kolbenstange 209 auf. Der Geberzylinder 206 ist so ausgebildet, dass der Kolben 208 in den Zylinder 207 eindringen und aus diesem austreten kann. Der Geberzylinder 206 weist weiterhin einen Anschluss 210 für eine Hydraulikleitung (hier nicht gezeigt) zur Verbindung mit einem Nehmerzylinder zur Hydraulischen Betätigung einer Reibungskupplung und einen Nachfüllstutzen 211 auf. Durch den Nachfüllstutzen 211 kann Hydraulikmittel wie beispielsweise Hydrauliköl oder Bremsflüssigkeit nachgefüllt werden. Um die Kolbenstange 209 herum ist ein Anschlagring 212 ausgebildet, der aus zwei Halbteilen 200 aufgebaut ist. Die entsprechenden Bajonette 204 sind mit entsprechenden Bajonettaufnahmen 213 eines Sockels 214 form- und kraftschlüssig verbunden. Der Anschlagring 212 weist einen Anschlagabschnitt 201 und eine Abstreifeinrichtung 202 auf.

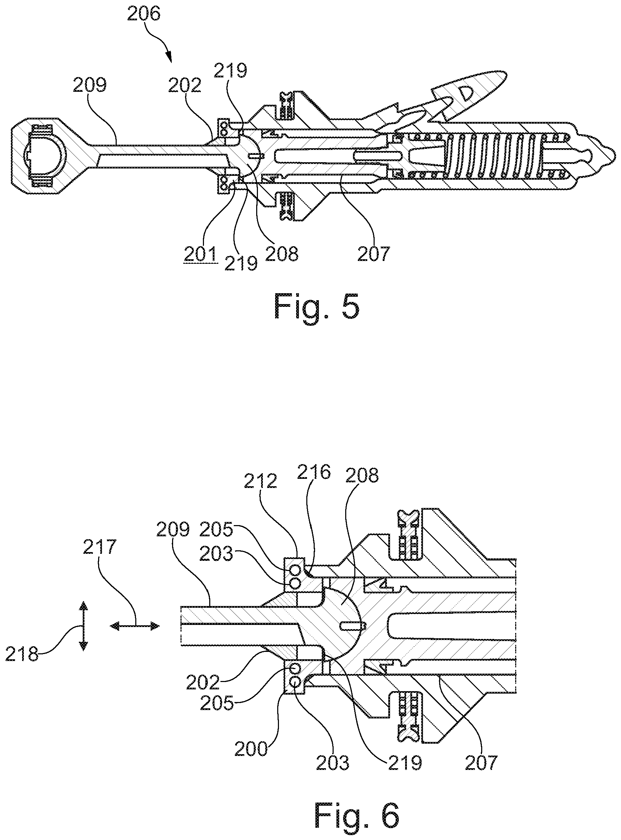

Fig. 5 zeigt schematisch einen Längsschnitt durch einen solchen Geberzylinder 206. Die Funktion des Anschlagabschnitts 201 des Anschlagrings 212 als Anschlag 219 für den Kolben 208 ist deutlich zu erkennen, ebenso, dass die Abstreifeinrichtung 202 die Kolbenstange 209 so umschließt, dass eventuell an dieser anhaftender Schmutz abgestreift wird und nicht in den Zylinder 207 eindringt.

Fig. 6 zeigt ein Detail des Längsschnitts aus Fig. 5 in vergrößerter Darstellung, in der der Anschlag 219 für den Kolben 208 zu erkennen ist. Fig. 6 zeigt auch Zapfen 203 und Zapfenaufnahme 205 der entsprechenden Halbteile 200 des Anschlagrings 212. Eine Fase 216 in der Öffnung des Zylinders 207 erlaubt ein leichtes Einführen des Anschlagrings 212 nach Bildung aus den beiden Halbteilen um die Kolbenstange 209 herum, nachdem der Kolben 208 in den Zylinder eingeführt wurde. Der in den obigen Figuren gezeigte Bajonettverschluss aus Bajonett 204 und Bajonettaufnahme 213 bewirkt eine sichere Verbindung zwischen Anschlagring 212 und Zylinder 207. Gleichzeitig wird dadurch ein Lösen des Anschlagrings 212 in axialer Richtung 217 wirksam verhindert. Die vorliegende Zentrierung des Anschlagrings 212 im Zylinder 207 führt gleichzeitig dazu, dass ein Lösen der beiden Halbteile 200 in einer radialen Richtung 218 verhindert wird. So können sich die beiden Halbteile 200 nicht voneinander lösen und der gebildete Anschlagring 212 kann sich nicht vom Zylinder trennen, wobei gleichzeitig die Abstreifeinrichtung 202 wirksam Schmutz von der Kolbenstange 209 abstreift.

Im Vergleich zu aus dem Stand der Technik bekannten Lösungen kann die Teileanzahl zur Ausbildung eines Anschlags für den Kolben 208 eines Geberzylinders 206 deutlich verringert werden. Gleichzeitig kann die Montage signifikant im Vergleich zu aus dem Stand der Technik bekannten Lösungen vereinfacht werden.

### Bezugszeichenliste

- 100: Geberzylinder
- 101: Zylinder
- 102: Kolben
- 103: Kolbenstange
- 104: Anschlagring
- 105: Abstreifring
- 106: Transportsicherung
- 107: Anschlag
- 200: Halbteil
- 201: Anschlagabschnitt
- 202: Abstreifeinrichtung
- 203: Zapfen
- 204: Bajonett
- 205: Zapfenaufnahme
- 206: Geberzylinder
- 207: Zylinder
- 208: Kolben
- 209: Kolbenstange
- 210: Anschluss für eine Hydraulikleitung
- 211: Nachfüllstutzen
- 212: Anschlagring
- 213: Bajonettaufnahme
- 214: Sockel
- 216: Fase
- 217: axiale Richtung
- 218: radiale Richtung
- 219: Anschlag

## Patentansprüche

1. Hydraulisches Betätigungssystem einer Reibungskupplung, insbesondere in einem brennkraftmaschinenbetriebenen Fahrzeug, umfassend einen Geberzylinder (206) mit einem Zylinder (207), mit einem Kolben (208) mit Kolbenstange (209) und einen Anschlagring (212) als Anschlag (219) des Kolbens (208), wobei der Anschlagring (212) einen Anschlagabschnitt (201) und eine Abstreifeinrichtung (202) aufweist, die die Kolbenstange (209) elastisch umschließt, **dadurch gekennzeichnet, dass** die Abstreifeinrichtung (202) einstückig am Anschlagabschnitt (201) angeformt ist und der Anschlagring (212) aus zwei identischen Halbteilen (200) aufgebaut ist.

2. Hydraulisches Betätigungssystem einer Reibungskupplung nach Anspruch 1, bei dem die Halbteile (200) durch eine kraftschlüssige Verbindung miteinander verbunden sind.

3. Hydraulisches Betätigungssystem einer Reibungskupplung nach einem der vorhergehenden Ansprüche, bei dem die Abstreifeinrichtung (202) aus einem elastischen Material ausgebildet ist.

4. Hydraulisches Betätigungssystem einer Reibungskupplung nach einem der vorhergehenden Ansprüche, bei dem der Anschlagabschnitt (201) aus einem thermoplastischen Kunststoff ausgebildet ist.

5. Hydraulisches Betätigungssystem einer Reibungskupplung nach einem der vorhergehenden Ansprüche, bei dem der Anschlagabschnitt (201) gemeinsam mit der entsprechenden Abstreifeinrichtung (202) in einer Mehrkompönentenspritztechnik ausgebildet ist.

6. Hydraulisches Betätigungssystem einer Reibungskupplung nach einem der vorhergehenden Ansprüche, bei dem der Anschlagring (201) über eine kraft- und/oder formschlüssige Verbindung mit dem Zylinder (207) verbunden ist.

7. Verfahren zur Herstellung eines aus zwei identischen Halbteilen (200) bestehenden Anschlagrings (212) für einen Geberzylinder (206), für ein hydraulisches Betätigungssystem einer Reibungskupplung, insbesondere in einem brennkraftmaschinenbetriebenen Fahrzeug, bei dem der Anschlagring (212) einen Anschlagabschnitt (201) und eine Abstreifeinrichtung (202) zum elastischen Umschließen einer Kolbenstange (209) umfasst, wobei Anschlagabschnitt (201) und Abstreifeinrichtung (202) gemeinsam in einer Mehrkomponenten-Spritzgusstechnik ausgebildet werden.

## Claims

1. Hydraulic actuating system of a friction clutch, in particular in a motor vehicle which is operated by internal combustion engine, comprising a master cylinder (206) with a cylinder (207), with a piston (208) with a piston rod (209), and a stop ring (212) as a stop (219) of the piston (208), the stop ring (212) having a stop section (201) and a stripping device (202) which encloses the piston rod (209) elastically, **characterized in that** the stripping device (202) is integrally formed in one piece on the stop section (201), and the stop ring (212) is constructed from two identical half parts (200).

2. Hydraulic actuating system of a friction clutch according to Claim 1, in which hydraulic actuating system the half parts (200) are connected to one another by way of a non-positive connection.

3. Hydraulic actuating system of a friction clutch according to one of the preceding claims, in which hydraulic actuating system the stripping device (202) is configured from an elastic material.

4. Hydraulic actuating system of a friction clutch according to one of the preceding claims, in which hydraulic actuating system the stop section (201) is configured from a thermoplastic.

5. Hydraulic actuating system of a friction clutch according to one of the preceding claims, in which hydraulic actuating system the stop section (201) is configured together with the corresponding stripping device (202) in a multiple-component injection moulding technique.

6. Hydraulic actuating system of a friction clutch according to one of the preceding claims, in which hydraulic actuating system the stop ring (201) is connected to the cylinder (207) via a non-positive and/or positively locking connection.

7. Method for producing a stop ring (212), which consists of two identical half rings (200), for a master cylinder (206), for a hydraulic actuating system of a friction clutch, in particular in a vehicle which is operated by internal combustion engine, in which hydraulic actuating system the stop ring (212) comprises a stop section (201) and a stripping device (202) for elastically enclosing a piston rod (209), the stop section (201) and the stripping device (202) being configured jointly in a multiple-component injection moulding technique.

## Revendications

1. Système d'actionnement hydraulique d'un embrayage à friction, en particulier dans un véhicule entraîné par moteur thermique, comprenant un maître-cylindre (206) avec un cylindre (207), avec un piston (208) avec une tige de piston (209) et un segment de butée (212) en tant que butée (219) du piston (208), le segment de butée (212) présentant une portion de butée (201) et un dispositif de raclage (202) qui entoure élastiquement la tige de piston (209), **caractérisé en ce que** le dispositif de raclage (202) est façonné d'une seule pièce sur la portion de butée (201) et le segment de butée (212) est constitué de deux demi-pièces identiques (200).

2. Système d'actionnement hydraulique d'un embrayage à friction selon la revendication 1, dans lequel les demi-pièces (200) sont connectées l'une à l'autre par une liaison par engagement par force.

3. Système d'actionnement hydraulique d'un embrayage à friction selon l'une quelconque des revendications précédentes, dans lequel le dispositif de raclage (202) est réalisé en un matériau élastique.

4. Système d'actionnement hydraulique d'un embrayage à friction selon l'une quelconque des revendications précédentes, dans lequel la portion de butée (201) est réalisée en un plastique thermoplastique.

5. Système d'actionnement hydraulique d'un embrayage à friction selon l'une quelconque des revendications précédentes, dans lequel la portion de butée (201) est réalisée en commun avec le dispositif de raclage correspondant (202) dans une technique de moulage à plusieurs composants.

6. Système d'actionnement hydraulique d'un embrayage à friction selon l'une quelconque des revendications précédentes, dans lequel le segment de butée (201) est connecté au cylindre (207) par le biais d'une connexion par engagement par force et/ou par correspondance de formes.

7. Procédé de fabrication d'un segment de butée (212) pour un maître-cylindre (206), constitué de deux demi-pièces identiques (200) pour un système d'actionnement hydraulique d'un embrayage à friction, en particulier dans un véhicule entraîné par un moteur thermique, dans lequel le segment de butée (212) comprend une portion de butée (201) et un dispositif de raclage (202) destiné à entourer élastiquement une tige de piston (209), la portion de butée (201) et le dispositif de raclage (202) étant réalisés en commun par une technique de moulage par injection à plusieurs composants.
